# EUROPEAN PATENT APPLICATION

(11) **EP 4 593 308 A1**
(43) Date of publication of application: **30.07.2025**
(21) Application number: 24153628.3
(22) Date of filing: 24.01.2024
(51) Int. Cl.: H04B 10/90, H01Q 9/04, H03C 7/02

(54) **INTEGRATED DEVICE FOR FIELD SENSING AND COMMUNICATIONS**

(71) Applicant: ETH Zurich, 8092 Zurich (CH)
(72) Inventor: Ibili, Hande, 8050 Zurich (CH); Baumann, Michael, 8051 Zurich (CH); Vukovic, Boris, 8800 Thalwil (CH); Smajic, Jasmin, 8645 Jona (CH); Leuthold, Juerg, 8173 Neerach (CH)
(74) Representative: Gygi, Andreas

(57) **Abstract**

An integrated device (1) comprises: a substrate (10), an electro-optic modulator antenna (11) arranged on the substrate (10) which is configured to receive a radio wave signal (30) and to convert an optical input signal (21) into an optical output signal (22) which depends on the radio wave signal (30), coupling elements (121, 122) arranged on the substrate (10) which are configured to optically couple the electro-optic modulator antenna (11) with fiber cores (41, 42) which are configured to receive the optical input signal (21) respectively to transmit the optical output signal (22).

## Description

### FIELD OF THE INVENTION

The present invention relates to an integrated device. In particular, the present invention relates to an integrated device for field sensing, communications, etc.

### BACKGROUND ART

Electro-optic receiver-based electromagnetic field sensors enable the detection of RF/THz signals (RF: radio frequency) by means of mapping the RF/THz signal onto an optical carrier. Such electro-optic field sensors can replace conventional RF to optical systems based on electronics as they are able to operate with lower RF losses and can mitigate electromagnetic interference issues. Besides, such electro-optic receivers enable RF/THz detection at highest frequencies with little or even no electrical power consumption. Applications include stand-alone usage as electromagnetic field sensors for near and far field detection, replacing the front-end in wireless communication links such as inter data-center communications, intra data-center communication, fiber-to-home communications, access to dead zones, and many more.

Important specifications of electro-optic field sensors are the RF bandwidth, which should be as high as possible, operation with low optical and RF/THz losses, a compact footprint, low electrical power consumption (when needed) and good sensitivity. However, even on-chip integrated devices have a large size and potentially suffer from electromagnetic interference problems with the electrical circuit or the package. Furthermore, they operate at rather low RF frequencies and fabrication of on-chip devices is costly.

Salamin Yannick et al., Direct Conversion of Free Space Millimeter Waves to Optical Domain by Plasmonic Modulator Antenna, Nano Lett. 2015, 15, 12, 8342-8346, Publication Date: November 16, 2015, https://doi.org/10.1021/acs.nanolett.5b04025, discloses a compact device consisting of a plasmonic phase modulator that is seamlessly cointegrated with an antenna. Neither high-speed electronics nor electronic amplification is required to drive the modulator. A built-in enhancement of the electric field enables the direct conversion of millimeter-wave signals to the optical domain. The enhancement is obtained via a resonant antenna that is directly coupled to an optical field by means of a plasmonic modulator.

### DISCLOSURE OF THE INVENTION

There may be a need for an integrated device, in particular for field sensing, communications, etc., which overcomes at least some drawbacks of the prior art. There may be a need for an integrated device which directly maps a radio wave signal onto an optical output signal and enables one or more of: detection of small fields, detection of signals at high frequencies, sensing of fields with either or both polarization, economic and simple fabrication (in particular on a large variety of substrates and wafers), compact dimensions, direct connection to an optical fiber (in particular a multicore fiber or a fiber array), reduced electronic interferences, built-in amplification of radio wave signals, high sensitivity, and broadband/multiband/dual-band operation.

Such a need may be met with the subject-matter of the independent claims. Advantageous embodiments are defined in the dependent claims.

Ideas underlying embodiments of the present invention may be interpreted as being based, inter alia, on the following observations and recognitions.

An aspect of the invention relates to an integrated device comprising a substrate, an electro-optic modulator antenna arranged on the substrate which is configured to receive a radio wave signal and to convert an optical input signal into an optical output signal which depends on the radio wave signal, and coupling elements arranged on the substrate which are configured to optically couple the electro-optic modulator antenna with fiber cores which are configured to receive the optical input signal respectively to transmit the optical output signal. The fiber cores transmit the optical input signal to the electro-optic modulator antenna and receive the optical output signal from the electro-optic modulator antenna. The fiber cores can relate to individual fibers or can be arranged within a multicore optical fiber or fiber array. The fiber cores can be directly attached to the integrated device, in particular to the coupling elements. The integrated device enables simple fabrication because unnecessary optical waveguides can be minimized or avoided, and the number of fiber interfaces can be minimized, thereby avoiding unnecessary reflections of electromagnetic fields. For example, the optical input signal relates to a continuous wave laser light and the optical output signal relates to the continuous wave laser light modulated with the radio wave signal. In some embodiments, the integrated device does not include electronics and therefore electronic interference is avoided. The integrated device can be used for field sensing, communications, etc.

According to an embodiment of the invention, the electro-optic modulator antenna includes an electro-optic modulator comprising a waveguide arranged between electrodes and antenna elements electrically connected to the electrodes. The integrated device is configured to directly convert a radio wave signal, such as a RF/THz signal, to the optical domain by directly feeding it from the antenna elements to the electro-optic modulator. The electro-optic modulator and the antenna elements can be configured to enhance the field at the electro-optic modulator compared to the incident field. Alternatively, an electronic on-chip amplifier can be arranged between the antenna elements and the electro-optic modulator.

According to an embodiment of the invention, the antenna elements have a resonant antenna design for enhancing the radio wave signal. For example, the antenna elements may have the form of a dipole, a bowtie, a four-leaf clover, a flexible log periodic, a dual-polarization slot-ring, etc.

According to an embodiment of the invention, the antenna elements relate to a flexible log-periodic antenna that includes pie slice antenna arms with circularly or arc block shaped tooth structures which are configured to activate different responses, in particular as regards one or more of high-sensitivity, multiband, flatband and broadband. Teeth can follow each other. The arc block shaped tooth structures can be axially symmetric with respect to the center of the pie slice antenna arms. A varying length scheme enables antenna characteristics of high sensitivity, broad bandwidth, multiband operation, flat frequency response, etc.

According to an embodiment of the invention, the antenna elements relate to a slot ring antenna which includes a Mach-Zehnder modulator scheme which is configured to activate a dual-polarization response. The antenna elements form a dual-polarized antenna which is capable of receiving THz-radiation respectively radio wave signals in x- and y-polarizations, which are directly mapped onto two optical carriers using two electro-optic modulators.

According to an embodiment of the invention, the electro-optic modulator antenna includes an electro-optic modulator in the form of a photonic modulator, a plasmonic modulator, or a plasmonic-hybrid modulator.

According to an embodiment of the invention, the electro-optic modulator antenna includes an electro-optic modulator which has a horizontal configuration or a vertical configuration.

According to an embodiment of the invention, the substrate includes one or more of: silicon, InP (Indium Phosphide), GaAs (Gallium Arsenide), diamond, quartz, sapphire, and any other flat and nonconductive surfaces. For example, the substrate may include other layers such as passivation, conductive metal, interconnecting vias between the layers, etc.

According to an embodiment of the invention, the substrate includes a lens element for amplifying the radio wave signal at the electro-optic modulator antenna. The radio wave signal can be received at the electro-optic modulator antenna through the lens element.

According to an embodiment of the invention, the substrate includes an anti-reflection coating for reducing reflections of the radio wave signal at an air interface between the substrate and air.

According to an embodiment of the invention, the coupling elements include a dielectric grating, a metallic grating, a metallic mirror and/or an edge coupler.

According to an embodiment of the invention, the electro-optic modulator antenna and the coupling elements have an in-plane configuration and the fiber cores relate to out-of-plane fiber cores.

According to an embodiment of the invention, the fiber cores are arranged within individual optical fibers, within a multicore optical fiber or within a fiber array.

According to an embodiment of the invention, an electronic on-chip amplifier is arranged between antenna elements of the electro-optic modulator antenna and an electro-optic modulator of the electro-optic modulator antenna.

According to an embodiment of the invention, the electro-optic modulator antenna includes an electro-optic modulator with a slot-waveguide, a strip-waveguide, or a plasmonic waveguide.

According to an embodiment of the invention, the optical waveguides are arranged to form an optical resonator or filter.

According to an embodiment of the invention, the electro-optic modulator antenna includes one or more antennas which are arranged in an array, in a Mach-Zehnder Interferometer (MZI), in a Michelson interferometer, in a Sagnac interferometer, in a Fabry-Pérot interferometer or in other interferometric configurations.

A further aspect of the invention relates to a method of operating an integrated device according to the present invention. The method comprises: receiving at the electro-optic modulator antenna the radio wave signal, receiving the optical input signal via a first coupling element from a first fiber core, converting the optical input signal at the electro-optic modulator antenna into the optical output signal which depends on the radio wave signal, and transmitting the optical output signal from the electro-optic modulator antenna via a second coupling element to a second fiber core.

In an embodiment, the method further comprises amplifying the radio wave signal with a lens element.

In an embodiment, the method further comprises amplifying a signal at an electro-optic modulator with an electronic on-chip amplifier connected between antenna elements and the electro-optic modulator.

### BRIEF DESCRIPTION OF THE DRAWINGS

In the following, advantageous embodiments of the invention will be described with reference to the enclosed drawings. However, neither the drawings nor the description shall be interpreted as limiting the invention.
Fig. 1 schematically shows a perspective view of an embodiment of an integrated device according to the present invention.
Fig. 2 schematically shows a top view of an embodiment of an electro-optic modulator antenna and coupling elements of an integrated device according to the present invention.
Fig. 3 schematically shows a perspective view of an embodiment of an integrated device according to the present invention.
Fig. 4 schematically shows a top view, Fig. 4A a cross section A-A of Fig. 4, and Fig. 4B a cross section B-B of Fig. 4 of an embodiment of an integrated device according to the present invention.
Fig. 5 schematically shows a top view, Fig. 5A a cross section A-A of Fig. 5, and Fig. 5B a cross section B-B of Fig. 5 of an embodiment of an integrated device according to the present invention.
Fig. 6A schematically shows a top view of an embodiment of antenna elements of an electro-optic modulator antenna according to the present invention.
Fig. 6B illustrates an exemplary field enhancement response as a function of frequency in GHz of antenna elements according to Fig. 6A.
Fig. 7A schematically shows a top view of an embodiment of antenna elements of an electro-optic modulator antenna according to the present invention.
Fig. 7B illustrates an exemplary field enhancement response as a function of frequency in GHz of antenna elements according to Fig. 7A.
Fig. 8A schematically shows a top view of an embodiment of antenna elements of an electro-optic modulator antenna according to the present invention.
Fig. 8B illustrates an exemplary field enhancement response as a function of frequency in GHz of antenna elements according to Fig. 8A.
Fig. 9A schematically shows a top view of an embodiment of antenna elements of an electro-optic modulator antenna according to the present invention.
Fig. 9B illustrates an exemplary field enhancement response as a function of frequency in GHz of antenna elements according to Fig. 9A.
Fig. 10 schematically shows an integrated dual polarization slot ring modulator antenna of an integrated device according to the present invention.
Fig. 11 schematically shows a perspective view of an embodiment of an integrated device according to the present invention.
Fig. 12 schematically shows possible method steps for operating an integrated device according to the present invention.

The figures are only schematic and not to scale. Same reference signs refer to same or similar features.

### MODE(S) FOR CARRYING OUT THE INVENTION

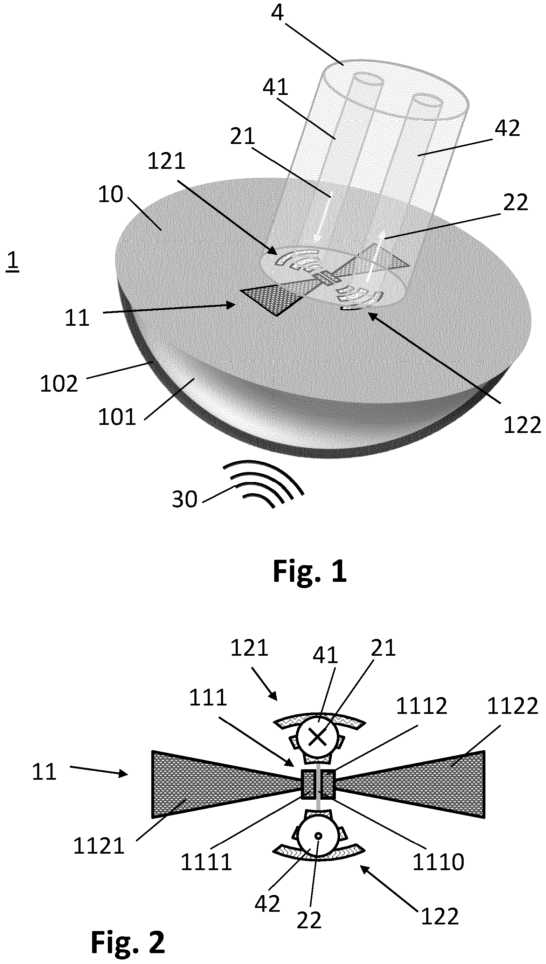

Fig. 1 schematically shows a perspective view of an embodiment of an integrated device 1 according to the present invention. The integrated device 1 comprises a substrate 10. An electro-optic modulator antenna 11 is arranged on the substrate 10. The electro-optic modulator antenna 11 is configured to receive a radio wave signal 30 and to convert an optical input signal 21 into an optical output signal 22 which depends on the radio wave signal 30. The electro-optic modulator antenna 11 is further described below in connection with Fig. 2. Coupling elements 121, 122 are arranged on the substrate 10. The coupling elements 121, 122 are configured to optically couple the electro-optic modulator antenna 11 with fiber cores 41, 42. The fiber cores 41, 42 can be arranged within an optical fiber 4. The fiber cores 41, 42 are configured to receive the optical input signal 21 respectively to transmit the optical output signal 22. The coupling elements 121, 122 can include a first coupling element 121 for coupling the optical input signal 21 from a first fiber core 41 into the electro-optic modulator antenna 11, and a second coupling element 122 for coupling the optical output signal 22 from the electro-optic modulator antenna 11 into a second fiber core 42.

As illustrated in Fig. 1, the substrate 10 includes a lens element 101. The lens element 101 can be configured to amplify the radio wave signal 30 at the electro-optic modulator antenna 11. The lens element 101 can be arranged opposite to a flat surface of the substrate 10 on which the electro-optic modulator antenna 11 is arranged. As illustrated in Fig. 1, the lens element 101 can include an anti-reflection coating 102 for reducing reflections at an air interface, which is located between surrounding air and the substrate 10.

Fig. 2 schematically shows a top view of an embodiment of an electro-optic modulator antenna 11 and coupling elements 121, 122 of an integrated device 1 according to the present invention. The electro-optic modulator antenna 11 includes an electro-optic modulator 111 and antenna elements 1121, 1122. The electro-optic modulator 111 includes a waveguide 1110 and electrodes 1111, 1112. A first antenna element 1121 is electrically connected to a first electrode 1111. A second antenna element 1122 is electrically connected to a second electrode 1112. The optical input signal 21 can be received via a first fiber core 41 and can be optically coupled from the first fiber core 41 via a first coupling element 121 into the waveguide 1110. The radio wave signal 30 can be received with the antenna elements 1121, 1122 for generating an electrical signal at the electrodes 1111, 1112, thereby converting the optical input signal 21 within the waveguide 1110 into the optical output signal 22. The optical output signal 22 can be optically coupled from the waveguide 1110 via a second coupling element 122 into a second fiber core 42. The optical output signal 22 can be transmitted via the second fiber core 42. In Fig. 2, the optical input signal 21 is schematically shown with a cross symbolizing the back of a directional arrow, in particular the direction of receipt of the optical input signal 21 via the first fiber core 41, and the optical output signal 22 is schematically shown with a circle symbolizing the tip of a directional arrow, in particular the direction of transmission of the optical output signal 22 via the second fiber core 42.

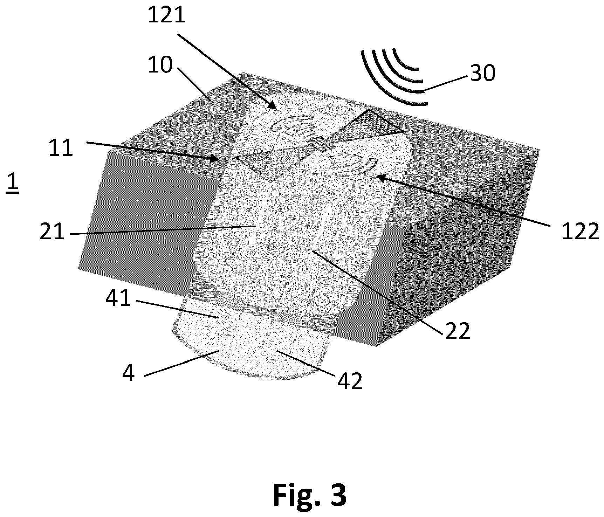

Fig. 3 schematically shows a perspective view of an embodiment of an integrated device 1 according to the present invention. As illustrated in Fig. 3, a substrate 10 may have the form of a cuboid. On one side of the cuboid, an electro-optic modulator antenna 11 and coupling elements 121, 122 are arranged. On an opposite side, fiber cores 41, 42 protrude the substrate 10 for enabling an optical coupling via the coupling elements 121, 122 between the fiber cores 41, 42 and the electro-optic modulator antenna 11. The fiber cores 41, 42 can be arranged within an optical fiber 4. The electro-optic modulator antenna 11 can be directly exposed to the radio wave signal 30. The substrate 10 can be etched locally to directly attach the optical fiber 4 to the electro-optic modulator antenna 11.

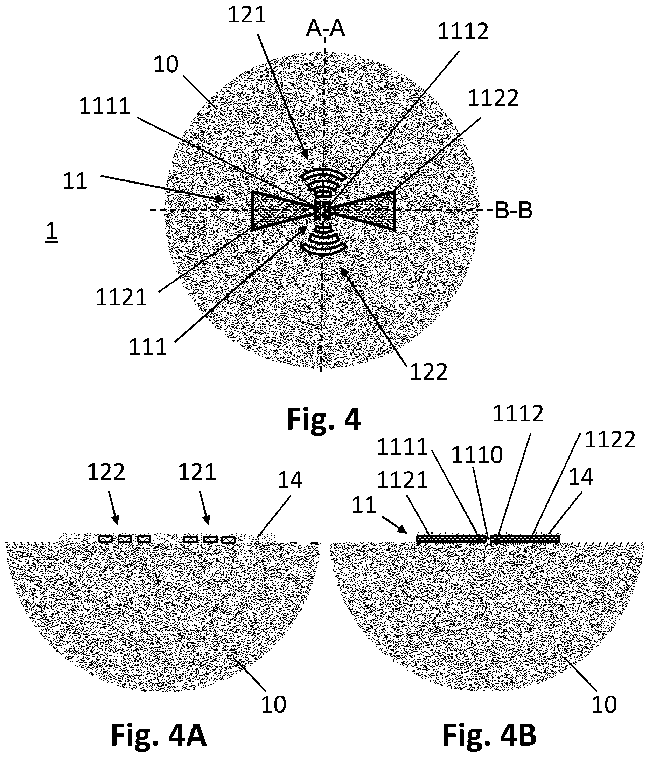

Fig. 4 schematically shows a top view, Fig. 4A a cross section A-A of Fig. 4, and Fig. 4B a cross section B-B of Fig. 4 of an embodiment of an integrated device 1 according to the present invention. An electro-optic modulator antenna 11 and coupling elements 121, 122 are arranged on a substrate 10. The electro-optic modulator antenna 11 includes an electro-optic modulator 111 and antenna elements 1121, 1122. The electro-optic modulator 111 includes a waveguide 1110 and electrodes 1111, 1112. For example, the first antenna element 1121 is arranged together with the first electrode 1111 in the form of a single piece. For example, the second antenna element 1122 is arranged together with the second electrode 1112 in the form of a single piece. The electro-optic modulator antenna 11 and the coupling elements are covered by a nonlinear material layer 14, wherein a gap between the electrodes 1111, 1112 is also filled with the nonlinear material layer 14 for forming the waveguide 1110. In some embodiments, only the gap between the electrodes 1111, 1112 is filled with the nonlinear material layer 14. As illustrated in Fig. 4B, the waveguide 1110 and the electrodes 1111, 1112 have a horizontal configuration. The electro-optic modulator antenna 11 is particularly suited for a phase modulator or an interferometer configuration such as a Mach-Zehnder modulator.

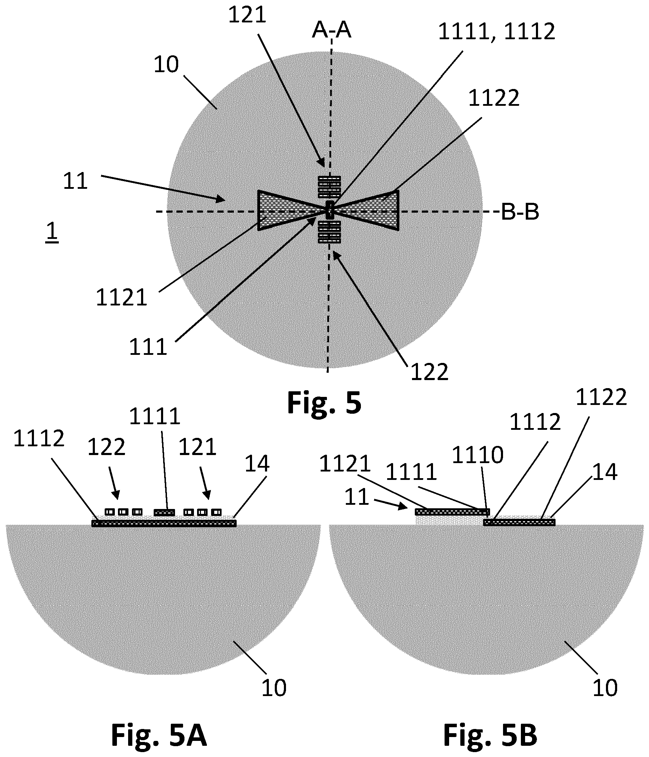

Fig. 5 schematically shows a top view, Fig. 5A a cross section A-A of Fig. 5, and Fig. 5B a cross section B-B of Fig. 5 of an embodiment of an integrated device 1 according to the present invention. An electro-optic modulator antenna 11 and coupling elements 121, 122 are arranged on a substrate 10. The electro-optic modulator antenna 11 includes an electro-optic modulator 111 and antenna elements 1121, 1122. The electro-optic modulator 111 includes a waveguide 1110 and electrodes 1111, 1112. A first electrode 1111 is electrically connected to a first antenna element 1121 and arranged above a second electrode 1112 which is electrically connected to a second antenna element 1121. A nonlinear material layer 14 is arranged between the first electrode 1111 and the second electrode 1112 and between the first antenna element 1121 and the second antenna element 1122. Thus, the first electrode 1111 is arranged on top of the nonlinear material layer 14, which is arranged on top of the second electrode 1112. For example, the first antenna element 1121 is arranged together with the first electrode 1111 in the form of a single piece. For example, the second antenna element 1122 is arranged together with the second electrode 1112 in the form of a single piece. For example, the second electrode 1112/second antenna element 1122 are fabricated on the substrate 10, the nonlinear material layer 14 is then fabricated on top of them, and the first electrode 1111/first antenna element 1121 are then fabricated on the nonlinear material layer 14. Furthermore, the coupling elements 121, 122 are fabricated on the nonlinear material layer 14. For example, the first electrode 1111/first antenna element 1121 can cover a larger area than the second electrode 1112/second antenna element 1122, or vice versa. For example, the nonlinear material layer 14 may cover a larger area than the first electrode 1111/first antenna element 1121. For example, the nonlinear material layer 14 can cover the same area as the second electrode 1112/second antenna element 1122. For example, the nonlinear material layer 14 does not enclose or does not fully enclose the second electrode 1112/second antenna element 1122. For example, the second electrode 1112 may cover a larger area than the first electrode 1111, or vice versa. For example, the first electrode 1111 and the second electrode 1112 may be placed as their centers or their edges are aligned or may be placed without any such alignment. As illustrated in Fig. 5B, the waveguide 1110 and the electrodes 1111, 1112 have a vertical configuration. The electro-optic modulator antenna 11 is particularly suited for a phase-shifter, a Mach-Zehnder configuration, or a phased-array multiplexer configuration.

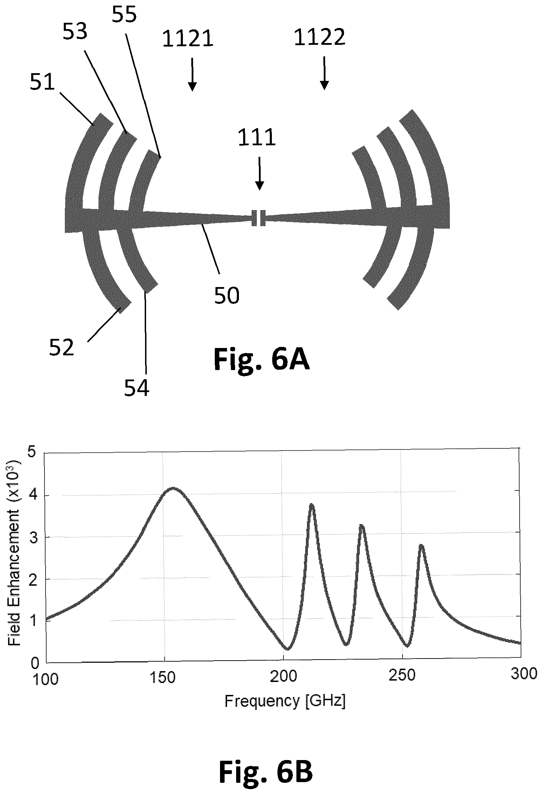

Fig. 6A schematically shows a top view of an embodiment of antenna elements 1121, 1122 of an electro-optic modulator antenna 11 according to the present invention. The antenna elements 1121, 1122 have a flexible log periodic configuration. The antenna elements 1121, 1122 extend away from the electro-optic modulator 111. For example, the antenna elements 1121, 1122 are symmetric with respect to the electro-optic modulator 111. For example, the antenna elements 1121, 1122 are symmetric with respect to the electro-optic modulator 111 can have a different symmetry. The antenna elements 1121, 1122 include pie slice antenna arms 50 with a plurality of arc block shaped tooth structures 51, 52, 53, 54, 55. The number of arc block tooths can vary. In this example, the arc block structures extend away at alternating sides of the pie slice antenna arms 50. For example, some of the arc block shaped tooth structures 51, 52, 53, 54, 55 can be omitted. For example, each arc block shaped tooth structure 51, 52, 53, 54, 55 is placed where the previous arc block shaped tooth structure 51, 52, 53, 54, 55 ends. For example, the spacing between the arc block shaped tooth structures 51, 52, 53, 54, 55 can vary. For example, each arc block shaped tooth structure 51, 52, 53, 54, 55 can have a same thickness and angle of the arc section. For example, the arc block shaped tooth structures 51, 52, 53, 54, 55 can have different thicknesses and angles.

The exemplary log periodic antenna schematically shown in Fig. 6A can have all arc block shaped tooth structures 51, 52, 53, 54, 55 placed without a gap and diametrically opposite to subsequent arc block shaped tooth structures 51, 52, 53, 54, 55 (a subsequent tooth structure has a larger distance from the electro-optic modulator 111). The inner radius of a first arc block shaped tooth structure 51 can correspond to the outer radius of a second arc block shaped tooth structure 52. For example, the ratio between the inner radius of the second arc block shaped tooth structure 52 and the inner radius of the first arc block shaped tooth structure 51 can amount to 0.9. All subsequent arc block shaped tooth structures 51, 52, 53, 54, 55 can be designed to maintain the same principle of symmetry and equal radius ratios. For example, the angle of an arc section of an arc block shaped tooth structure 51, 52, 53, 54, 55 can amount to 40 degrees. The arrangement of arc block shaped tooth structures 51, 52, 53, 54, 55 can be symmetric with respect to the pie slice antenna arm 50. For example, this arrangement of the arc block shaped tooth structures 51, 52, 53, 54, 55 can result in a multiband frequency response of a field enhancement. For example, a similar behavior can be obtained with varying parameters for this antenna type.

Fig. 6B illustrates an exemplary field enhancement response as a function of frequency in GHz of antenna elements 1121, 1122 according to Fig. 6A. According to this example, the antenna elements 1121, 1122 have a multiband response at frequencies of about 154 GHz, 212 GHz, 233 GHz, and 270 GHz. The field enhancement ranges between about 2700 and 4100 for these frequencies. For example, depending on the design, the antenna elements 1121, 1122 can have a multiband frequency response at any desired frequency.

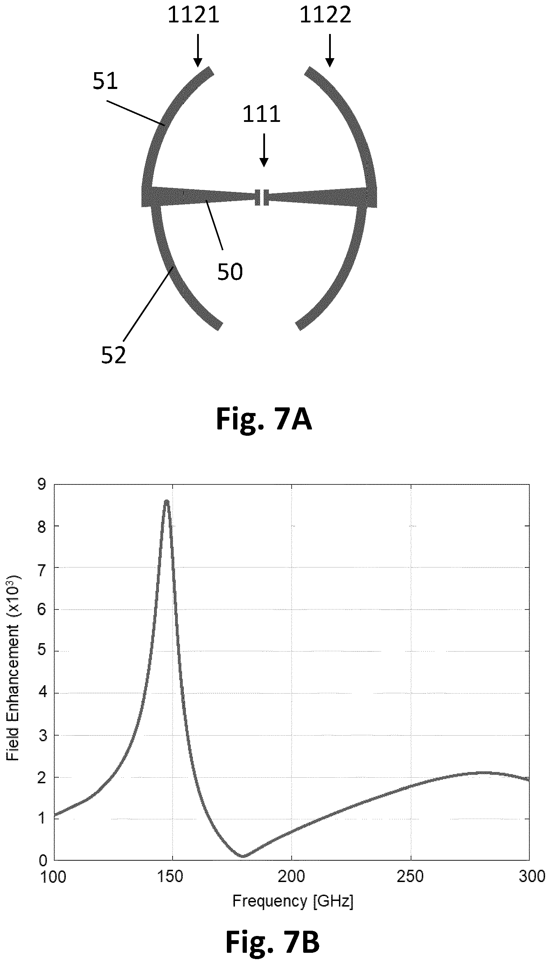

Fig. 7A schematically shows a top view of an embodiment of antenna elements 1121, 1122 of an electro-optic modulator antenna 11 according to the present invention. Contrary to the embodiment shown in Fig. 6A, only two arc block shaped tooth structures 51, 52 are arranged, which have an increased length. A second arc block shaped tooth structure 52 is arranged diametrically opposite to a first arc block shaped tooth structure 51. An inner radius of the first arc block shaped tooth structure 51 corresponds to the outer radius of the second arc block shaped tooth structure 52. For example, the ratio between these radii can amount to 0.95. For example, the angle of the arc section of the arc block shaped tooth structures 51, 52 can amount to 65 degrees. The arrangement of the arc block shaped tooth structures 51, 52 can be axially symmetric with respect to the center of the pie slice antenna arm 50. For example, this arrangement of the of arc block shaped tooth structures 51, 52, 53, 54, 55 can result in a high field enhancement response. For example, a similar behavior can be obtained with varying parameters for this antenna type.

Fig. 7B illustrates an exemplary field enhancement response as a function of frequency in GHz of antenna elements 1121, 1122 according to Fig. 7A. According to this example, the antenna elements 1121, 1122 have a high field enhancement response at a frequency of about 148 GHz with field enhancement of about 8600. For example, this antenna type can have a high field enhancement response at any desired frequency.

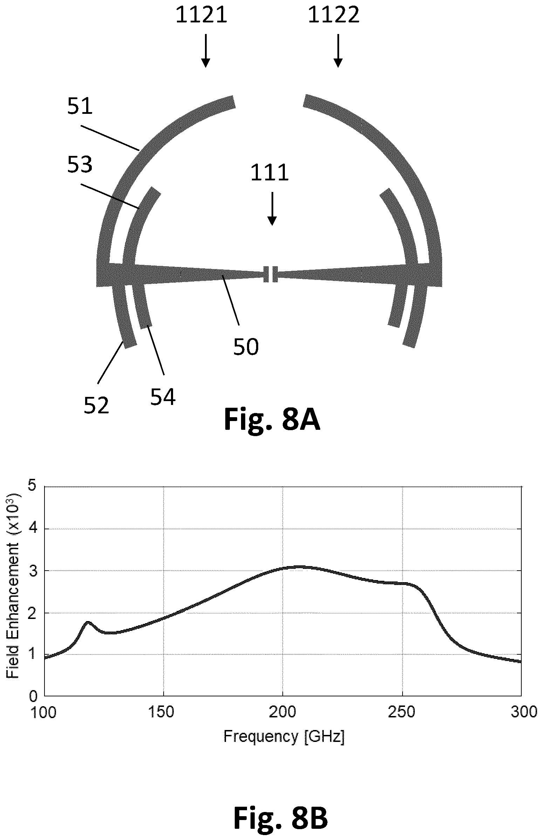

Fig. 8A schematically shows a top view of an embodiment of antenna elements 1121, 1122 of an electro-optic modulator antenna 11 according to the present invention. Contrary to the embodiment shown in Fig. 6A, only four arc block shaped tooth structures 51, 52, 53, 54 are arranged. A length of the arc block shaped tooth structures 51, 52, 53, 54 increases with increasing distance from the electro-optic modulator 111. The arc block shaped tooth structures 51, 52, 53, 54 are arranged without a gap and diametrically opposite to subsequent arc block shaped tooth structures 52, 53, 54. An inner radius of the first arc block shaped tooth structure 51 corresponds to the outer radius of the second arc block shaped tooth structure 52. For example, the ratio between these radii can amount to 0.95. Subsequent arc block shaped tooth structures 52, 53, 54 can maintain the same principle of symmetry and equal radius ratios. For example, the arc section of the first, second, third and fourth arc block shaped tooth structure 51, 52, 53, 54 can amount to 75, 20, 30 and 15 degrees. The arrangement of the arc block shaped tooth structures 51, 52, 53, 54 can be axially symmetric with respect to the center of the pie slice antenna arm 50. For example, this arrangement of the of arc block shaped tooth structures 51, 52, 53, 54, 55 can result in a broadband frequency field enhancement response. For example, a similar behavior can be obtained with varying parameters for this antenna type.

Fig. 8B illustrates an exemplary field enhancement response as a function of frequency in GHz of antenna elements 1121, 1122 according to Fig. 8A. According to this example, the antenna elements 1121, 1122 have a broadband frequency response between frequencies of about 155 GHz and 265 GHz with field enhancement of about greater than 2000. For example, this antenna type can have a broadband field enhancement response at any desired frequency.

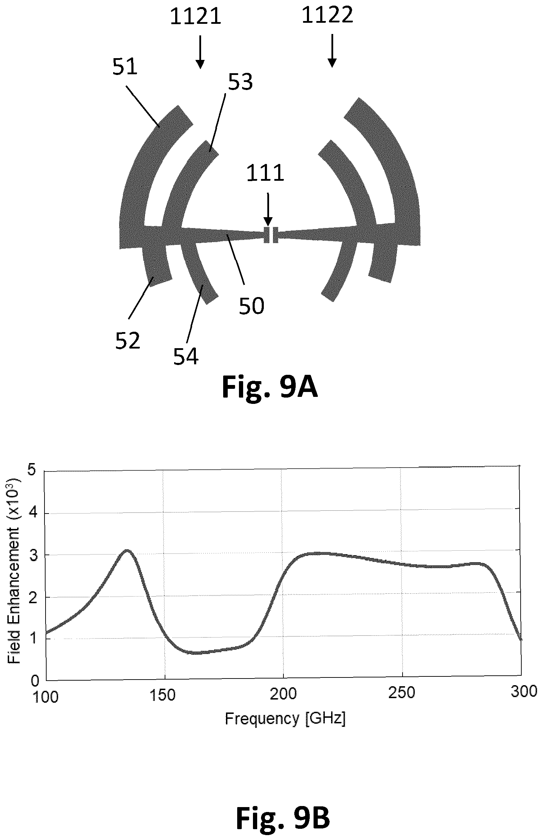

Fig. 9A schematically shows a top view of an embodiment of antenna elements 1121, 1122 of an electro-optic modulator antenna 11 according to the present invention. Contrary to the embodiment shown in Fig. 6A, only four arc block shaped tooth structures 51, 52, 53, 54 are arranged. A length of the arc block shaped tooth structures 51, 52 on one side of the pie slice antenna arms 50 decreases with increasing distance from the electro-optic modulator 111. The arc block shaped tooth structures 51, 52, 53, 54 are arranged without a gap and diametrically opposite to subsequent arc block shaped tooth structures 52, 53, 54. An inner radius of the first arc block shaped tooth structure 51 corresponds to the outer radius of the second arc block shaped tooth structure 52. For example, the ratio between these radii can amount to 0.83. Subsequent arc block shaped tooth structures 52, 53, 54 can maintain the same principle of symmetry and equal radius ratios. For example, the arc section of the first, second, third and fourth arc block shaped tooth structure 51, 52, 53, 54 can amount to 50, 18, 52 and 42 degrees. The arrangement of the arc block shaped tooth structures 51, 52, 53, 54 can be axially symmetric with respect to the center of the pie slice antenna arm 50. For example, this arrangement of the of arc block shaped tooth structures 51, 52, 53, 54, 55 can result in a flatband frequency field enhancement response. For example, a similar behavior can be obtained with varying parameters for this antenna type.

Fig. 9B illustrates an exemplary field enhancement response as a function of frequency in GHz of antenna elements 1121, 1122 according to Fig. 9A. According to this example, the antenna elements 1121, 1122 have a flatband frequency response. The flatband frequency response has a field enhancement of about 3000 at frequencies of between about 200 GHz and 285 GHz. For example, this antenna type can have a flatband field enhancement response at any desired frequency.

For example, the flexible log periodic antenna elements 1111, 1112 schematically shown in Fig. 6A, 7A, 8A, 9A can be cointegrated with an electro-optic modulator 111 in a horizontal configuration (cf. Fig. 4, 4A, 4B) or in a vertical configuration (cf. Fig. 5, 5A, 5B).

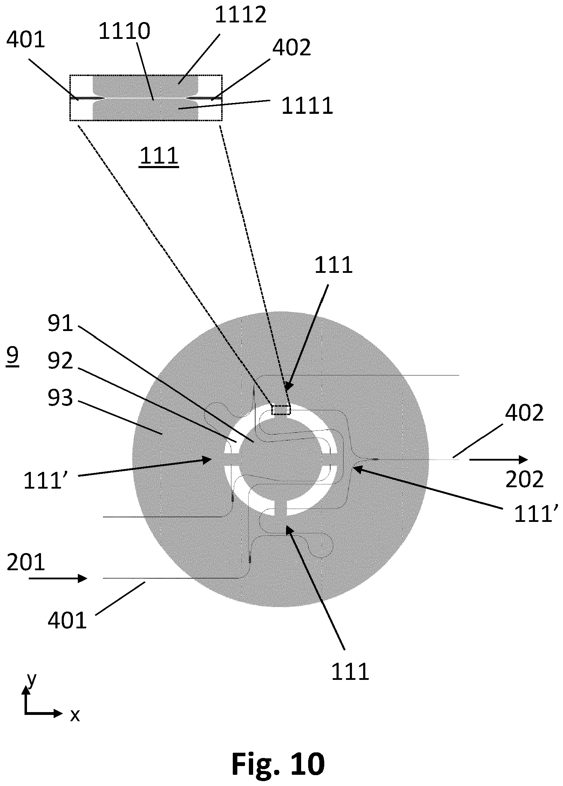

Fig. 10 schematically shows an integrated dual polarization slot ring modulator antenna 9 of an integrated device 1 according to the present invention. A ring antenna configuration includes an inner conductive part 91 (e.g., center plate), a slot 92, and an outer conductive part 92. Two pairs of plasmonic modulators 111, 111' are arranged between the inner conductive part 91 and the outer conductive part 93. Thus, the plasmonic modulators 111, 111' are arranged at clock positions, 3, 6, 9, and 12. As illustrated in the enlarged view of one plasmonic modulator 111, a first electrode 1111 is electrically connected to the inner conductive part 91, and a second electrode 1112 is connected to the outer conductive part 93. As illustrated in the enlarged view of the plasmonic modulator 111, a waveguide 1110 is arranged between the electrodes 1111, 1112, which can receive an optical input signal from a photonic input 401 and transmit an optical output signal to a photonic output 402. Photonic cores 401, 402 and splitters are arranged and configured to transmit an optical input signal 201 to the plasmonic modulators 111, 111' and to receive an optical output signal 202 from the plasmonic modulators 111, 111'. As indicated with arrows x, y, one pair of the plasmonic modulators 111' is arranged in an x-direction, namely the plasmonic modulators 111' at clock positions 3 and 9, the other pair of the plasmonic modulators 111 is arranged in an orthogonal y-direction, namely the plasmonic modulators 111 at clock positions 6 and 12. For clarity, reference signs of photonic cores relating to plasmonic modulator 111' are omitted. The plasmonic modulators 111, 111' are connected in a Mach-Zehnder modulator configuration. The plasmonic modulators 111 receive RF/THz-radiation respectively a radio wave signal polarized in the y-direction. The plasmonic modulators 111' receive RF/THz-radiation respectively a radio wave signal polarized in the x-direction. For example, geometries such as radius, width, etc. of the conductive parts 91, 93 varies. The resonant frequency of the slot ring modulator can be tuned by adjusting a radius of the slot ring. The electro-optic material of the plasmonic modulators 111, 111' can be poled upon need by applying a voltage between the centre pad and the ground plane. When the incident electric field is polarized in x-direction, the electric field in the plasmonic slots at positions 3 and 9 will strongly be enhanced and be polarized in x-direction as well. The incident electric field and if necessary the applied poling field are parallel in slot 3 and anti-parallel in slot 9. Therefore, the MZM is driven in a push-pull configuration. At the same time the field enhancement in slot 6 and 12 is very weak compared to slot 3 and 9, making them insensitive to incident fields polarized in x-direction. Due to symmetry reasons the same is true for the y-polarization. For example, a different modulator scheme can be chosen to connect the pairs of plasmonic modulators 111, 111'. For example, the ring antenna configuration can have different shapes such as ellipsoid, square, etc. The coupling scheme may include one or more of a dielectric grating, a metallic grating, an edge, and a metallic mirror.

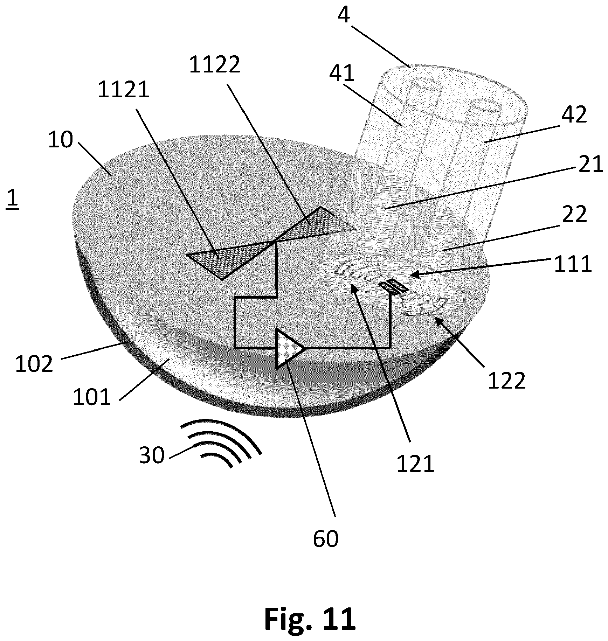

Fig. 11 schematically shows a perspective view of an embodiment of an integrated device 1 according to the present invention. Contrary to the embodiment schematically shown in Fig. 1, an electronic on-chip amplifier 60 is arranged on the substrate 10 and electrically connected between the antenna elements 1121, 1122 and the electro-optic modulator 111. The antenna elements 1121, 1122 capture the radio wave signal 30 and direct it to the electronic on-chip amplifier 60. The electronic on-chip amplifier 60 amplifies or strengthens the signal, and direct the amplified signal to the electro-optic modulator 111. The electro-optic modulator 111 converts the optical input signal 21 received from the fiber core 41 via coupling element 121 into an optical output signal 22 which depends on the radio wave signal 30. The optical output signal 22 is transmitted via coupling element 122 to the fiber core 42. For example, a matching network can be arranged between the antenna elements 1121, 1122 and the electronic on-chip amplifier 60. For example, a matching network can be arranged between the electronic on-chip amplifier 60 and the electro-optic modulator 111.

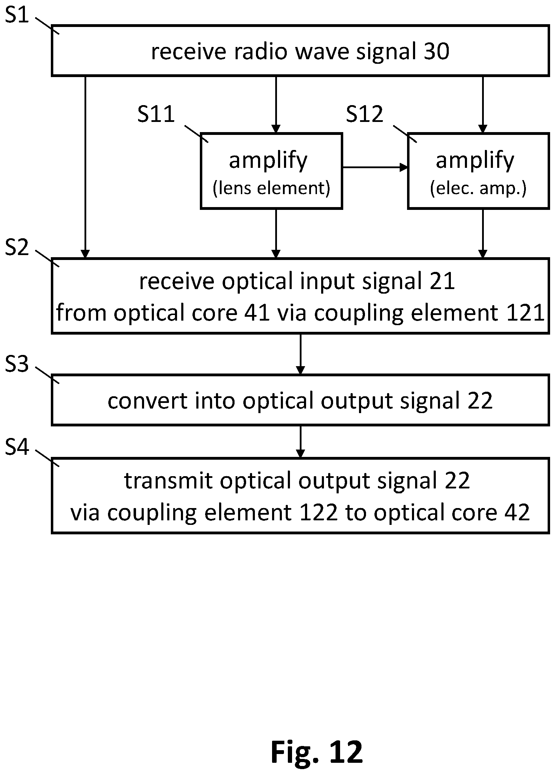

Fig. 12 schematically shows possible method steps for operating an integrated device 1 according to the present invention. In step S1, a radio wave signal 30 is received at the electro-optic modulator antenna 11. In step S2, the optical input signal 21 is received via a first coupling element 121 from a first fiber core 41. In step S3, the optical input signal 21 is converted at the electro-optic modulator antenna 11 into the optical output signal which depends on the radio wave signal 30. In step S4, the optical output signal 22 is transmitted from the electro-optic modulator antenna 11 via a second coupling element 122 to a second fiber core 42.

In optional step S11, the radio wave signal 30 is amplified with a lens element 101.

In optional step S12, a signal at an electro-optic modulator 111 of the electro-optic modulator antenna 11 is amplified with an electronic on-chip amplifier connected between antenna elements 1121, 1122 and the electro-optic modulator 111.

The substrate 10 can include silicon, InP (Indium Phosphide), GaAs (Gallium Arsenide), diamond, quartz, sapphire, PDMS (Polydimethylsiloxane), SiC (Silicon Carbide), SiN (Silicon Nitride), GaN (Gallium Nitride), AIN (Aluminum Nitride), teflon, or any other flat and nonconductive surfaces, etc.. The substrate may include other layers such as passivation, conductive metal and interconnecting vias between the layers.

The substrate 10 can be polished, covered with an anti-reflection coating 102, have attached a lens or the form of a lens element 101, etc.

The anti-reflection coating 102 can be realized by a single or layered transition block between air and the substrate 10, by etching meta material-based structures such as pyramids, holes, etc. into the substrate 10, etc.

The substrate 10 can be arranged to form a resonator for the incident field 30. For this purpose, additional layers as anti-reflection coating 102 may be applied.

The lens element 101 can be realized by one or more methods such as 3D printing, injection molding, sintering or mechanical machining, etc.

The fiber cores 41, 42 are directly terminated at the coupling elements 121, 122 by means of an adhesive material, i.e., glue, paste, etc. or other means of bonding.

The coupling elements 121, 122 can include dielectric gratings, metallic gratings, metallic mirrors, edge couplers, etc.

The radio wave signal 30 can relate to a RF/THz signal.

The radio wave signal 30 can be received at the electro-optic modulator antenna 11 from a direction opposite to the fiber cores 41, 42.

The electro-optic modulator 111 can relate to a photonic modulator, a plasmonic modulator, a hybrid-plasmonic modulator, etc. The electro-optic modulator 111 can be realized as a phase modulator or a Mach-Zehnder modulator, Michelson, Sagnac interferometer or another interferometer configuration. The waveguide 1110 of the electro-optic modulator 111 can include a nonlinear material such as a nonlinear organic Pockels-effect material, a ferroelectric electro-optical material such as LiNbO3, BTO, etc., an artificial electro-optical material, etc. The nonlinear material can be realized as an electro-optical material that exploits the plasma dispersion effect such as silicon, etc., or the nonlinear Stark effect such as a compound of InGaAsP, etc.

The electro-optic modulator antenna 11 is made of a conductive material. The electro-optic modulator 111 may also confine the optical mode within the modulator. The electrode elements 1111, 1112 and the antenna elements 1121, 1122 may be fabricated of a metal such as Cu, Au, Ag, Pt, Al, etc. The optical mode within the electro-optic modulator 111 may be converted to a surface plasmon polariton (plasmon). They may be realized by graphene or another conductive 2D material. The 2D material may be covered embedded into a dielectric material. They may also be realized by a semimetal such as indium-tin-oxide (ITO), etc.

The optical input signal 21 can relate to a continuous wave (CW) laser light, etc.

The fiber cores 41, 42 can be arranged within an optical fiber 4, such as a multi-core fiber, a fiber array, etc. The fiber cores 41, 42 can relate to individual optical fibers.

The electro-optic modulator antenna 11 and/or the coupling elements 121, 122 can include a coating, a cladding, a superstrate, etc.

A first electrode 1111 electrically connected to a first antenna element 1121 can be formed from a single piece. A second electrode 1112 electrically connected to a second antenna element 1122 can be formed from a single piece. The antenna can be arranged as phased array antenna.

The antenna elements 1121, 1122 can be designed as a bowtie, a dipole, a four-leaf clover, etc.

The integrated device 1 can be fabricated using standard integrated device fabrication processes such as depositing described layers via electron-beam evaporation, electron-beam lithography, UV photo lithography, spin-coating, poling, etc.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### LIST OF REFERENCE SIGNS

1 integrated device
10 substrate
101 lens element
102 anti-reflection coating
11 electro-optic modulator antenna
111 electro-optic modulator
1110 waveguide
1111, 1112 electrodes
1121, 1122 antenna elements
121, 122 coupling elements
14 nonlinear material layer
21, 201 optical input signal
22, 202 optical output signal
30 radio wave signal
4 optical fiber
41, 42 fiber cores
401 photonic input
402 photonic output
50 pie slice antenna arm
51, 52, 53, 54, 55 arc block shaped tooth structures
60 electronic on-chip amplifier
9 dual polarization slot ring modulator antenna
91 inner conductive part
92 slot between inner and outer conductive parts
93 outer conductive part

## Claims

1. An integrated device (1), comprising:
a substrate (10),
an electro-optic modulator antenna (11) arranged on the substrate (10) which is configured to receive a radio wave signal (30) and to convert an optical input signal (21) into an optical output signal (22) which depends on the radio wave signal (30),
coupling elements (121, 122) arranged on the substrate (10) which are configured to optically couple the electro-optic modulator antenna (11) with fiber cores (41, 42) which are configured to receive the optical input signal (21) respectively to transmit the optical output signal (22).

2. The integrated device (1) according to claim 1, wherein the electro-optic modulator antenna (11) includes an electro-optic modulator (111) comprising a waveguide (1110) arranged between electrodes (1111, 1112) and antenna elements (1121, 1122) electrically connected to the electrodes (1111, 1112).

3. The integrated device (1) according to one of claims 1 or 2, wherein the electro-optic modulator (11) includes antenna elements (1121, 1122) which have a resonant antenna design for enhancing the radio wave signal.

4. The integrated device (1) according to one of claims 1 to 3, wherein the antenna elements relate to a flexible log-periodic antenna that includes pie slice antenna arms with circularly or arc block shaped tooth structures which are configured to activate different responses, in particular as regards one or more of high-sensitivity, multiband, flatband and broadband.

5. The integrated device (1) according to one of claims 1 to 3, wherein the antenna elements relate to a slot ring antenna which includes a Mach-Zehnder modulator scheme which is configured to activate a dual polarization response.

6. The integrated device (1) according to one of claims 1 to 5, wherein the electro-optic modulator antenna (11) includes an electro-optic modulator (111) in the form of a photonic modulator, a plasmonic modulator, or a plasmonic-hybrid modulator.

7. The integrated device (1) according to one of claims 1 to 6, wherein the electro-optic modulator antenna (11) includes an electro-optic modulator (111) which has a horizontal configuration or a vertical configuration.

8. The integrated device (1) according to one of claims 1 to 7, wherein the substrate (10) includes a lens element (101) for amplifying the radio wave signal (30) at the electro-optic modulator antenna (11).

9. The integrated device (1) according to one of claims 1 to 8, wherein the substrate (10) includes an anti-reflection coating (102) for reducing reflections of the radio wave signal (30) at an air interface between the substrate (10) and air.

10. The integrated device (1) according to one of claims 1 to 9, wherein the coupling elements (121, 122) include one or more of a dielectric grating, a metal grating, a metallic mirror and an edge coupler.

11. The integrated device (1) according to one of claims 1 to 10, wherein the fiber cores (41, 42) are arranged within individual optical fibers, within a multicore optical fiber (4) or within a fiber array.

12. The integrated device (1) according to one of claims 1 to 11, wherein an electronic on-chip amplifier (60) is arranged between antenna elements (1121, 1122) of the electro-optic modulator antenna (11) and an electro-optic modulator (111) of the electro-optic modulator antenna (11).

13. The integrated device (1) according to one of claims 1 to 12, wherein the optical waveguides are arranged to form an optical resonator or filter.

14. A method of operating an integrated device (1) according to claim 1 to 13, the method comprising:
receiving (S1) at the electro-optic modulator antenna (11) the radio wave signal (30),
receiving (S2) the optical input signal (21) via a first coupling element (121) from a first fiber core (41),
converting (S3) the optical input signal (21) at the electro-optic modulator antenna (11) into the optical output signal (22) which depends on the radio wave signal (30),
transmitting (S4) the optical output signal (22) from the electro-optic modulator antenna (11) via a second coupling element (122) to a second fiber core (42).

15. The method according to claim 14, further comprising amplifying (S11) the radio wave signal (30) with a lens element (101).

16. The method according to claim 14 or 15, further comprising amplifying a signal at an electro-optic modulator (111) with an electronic on-chip amplifier (60) connected between antenna elements (1121, 1122) and the electro-optic modulator (111).
